# EUROPEAN PATENT SPECIFICATION

(11) **EP 3 930 282 B1**
(45) Date of publication and mention of the grant of the patent: **12.04.2023**
(21) Application number: 20209693.9
(22) Date of filing: 25.11.2020
(51) Int. Cl.: H04L 9/32, H04L 9/40, H04L 67/1097, G06F 21/44

(54) **SYSTEM, APPARATUS AND METHOD FOR REMOTELY AUTHENTICATING PERIPHERAL DEVICES**
SYSTEM, VORRICHTUNG UND VERFAHREN ZUR FERNAUTHENTIFIZIERUNG VON PERIPHERIEGERÄTEN
SYSTÈME, APPAREIL ET PROCÉDÉ D'AUTHENTIFICATION À DISTANCE DE DISPOSITIFS PÉRIPHÉRIQUES

(30) Priority: 25.06.2020 US 202016911749
(43) Date of publication of application: 29.12.2021
(73) Proprietor: INTEL Corporation, Santa Clara, CA 95054 (US)
(72) Inventor: REGUPATHY, RAJARAM, 560103 Bangalore (IN); ISMAIL, ABDUL, Beaverton, OR 97007 (US); WALLICK, STEPHANIE, Hillsboro, OR 97124 (US)
(74) Representative: Goddar, Heinz J.

(56) References cited:
- US-A1- 2013 239 188
- US-B1- 9 571 164
- "Universal Serial Bus interfaces for data and power - Part 1-4: Common components - USB Type-C(TM) Authentication Specification", IEC 62680-1-4:2018, IEC, 3, RUE DE VAREMBÉ, PO BOX 131, CH-1211 GENEVA 20, SWITZERLAND, 10 April 2018 (2018-04-10), pages 1-65, XP082013763,

## Description

### Technical Field

Embodiments relate to authenticating devices remotely.

### Background

Universal Serial Bus (USB) has evolved from being an interface to connect low power peripherals into a more sophisticated system that adds capabilities of up to 100 Watts in power delivery and super speed data transfer up to 40 gigabits per second (Gbps). The USB Implementers Forum (USB-IF) maintains specifications for cables, connectors, protocols, communication and power delivery (PD).

The USB4 specification version 1.0 (published August 29, 2019) implements a converged input/output protocol over a USB Type-C port providing multiple functionalities like USB, DisplayPort and Peripheral Component Interconnect (PCI), thus enabling newer devices connected through USB ports in future compute ecosystems. This includes devices for use in a corporate environment that implement secure access or access with policy enforcement.

The USB Type-C (USB-C) Authentication Specification revision 1.0 (published January 7, 2019) extends the functionality of USB-C systems to authenticate devices over a USB-C port. However, such authentication is limited to peer-to-peer use cases, where a USB device is physically coupled to an authenticating system.
US 9,571,164 B1 describes a processing device configured to establish an NFC connection with an NFC tag using the NFC interface circuitry, establish a network connection with an authentication server using the network interface circuitry, and forward one or more messages between the NFC tag and the authentication server, the one or more messages comprising messages of a challenge/response authentication protocol performed between the NFC tag and the authentication server. Responsive to a successful completion of the challenge/response authentication protocol between the NFC tag and the authentication server, the processing device is authenticated to the authentication server.
US 2013/0239188 A1 describes an authentication method for a Universal Serial Bus (USB) device. The authentication method includes performing two-way authentication with an authentication server via a server, to generate an authentication result indicating whether the authentication is successful; and generating a one time password according to the authentication result.
The document "Universal Serial Bus interfaces for data and power- Part 1-4:
Common components - USB Type-C (TM) Authentication Specification", 10 April 2018, XP082013763 describes the USB Type-C Authentication Specification standard.
The invention is set forth in the independent claims. Embodiments of the invention are described in the dependent claims.

### Brief Description of the Drawings

FIG. 1 is a flow diagram of a method in accordance with an embodiment.
FIG. 2 is a flow diagram of a method in accordance with another embodiment.
FIG. 3 is a block diagram of a system in accordance with one embodiment.
FIG. 4 is a block diagram of an enterprise environment in accordance with another embodiment.
FIG. 5 is an illustration of an authentication sequence in accordance with an embodiment.
FIG. 6 is a block diagram of an embodiment of a system in accordance with an embodiment.
FIG. 7 is a block diagram of a system in accordance with another embodiment of the present invention.

### Detailed Description

In various embodiments, an authentication protocol is provided to enable cloud-based authentication of peripheral devices coupled to remote client systems. While many different architectures are possible, embodiments may be applicable to cloud-based environments in which a cloud server acts as an authentication initiator when a peripheral device is connected into a given client system, e.g., via a USB/USB-C connection.

Many different types of client systems may implement embodiments, including cloud-managed workplace devices such as a cloud-managed Chromebook^{™} arrangement. Other embodiments may be used in connection with a cloud point-of-sale system. Of course embodiments are not limited to these examples and apply equally to many different types of client systems that may be present in a given enterprise or other secure environment.

With embodiments, many different types of peripheral and other devices that can dynamically connect into a system, such as so-called converged IO peripheral devices, when connected into a local computing system undergo an authentication procedure. When the local computing system itself is implemented within a cloud environment in which some enterprise or other IT management of the local computing system resides in the cloud, a cloud computing device such as a cloud server may act as an authentication initiator for the authentication of the peripheral device.

As such, in arrangements herein, the device may receive a request for authentication from the locally coupled system, based on an authentication initiation by a cloud-based server. In turn, rather than implementing a peer-to-peer authentication between a client computing device and the peripheral device, embodiments provide techniques and mechanisms to enable/extend a cloud-based authentication of local peripheral devices.

In one embodiment, an authentication sequence defined by a USB-C authentication protocol can be used to authenticate, e.g., USB PD products originating from different vendors. In this way, since USB is an open standard, embodiment may help protect a host platform from security vulnerabilities. Understand of course embodiments are not limited in this regard, and authentication communications between peer-connected devices may occur in accordance with other authentication protocols or a custom-defined authentication protocol.

Embodiments thus obtain authentication information from the peripheral device by way of peer-to-peer communication between the local client computing device and the peripheral device. Understand that such operation proceeds in response to receipt of an authentication request from the cloud-based server. In turn, once the client computing device successfully obtains the authentication information, it may communicate it to the cloud-based server, e.g., with some of its own authentication information. In one embodiment, the client computing device may append at least a portion of the device authentication information to at least some of its authentication information. In turn, this consolidated authentication information may be sent to the cloud-based server. In particular embodiment, this information may be encapsulated within one or more protocol packets and then sent to the cloud-based server.

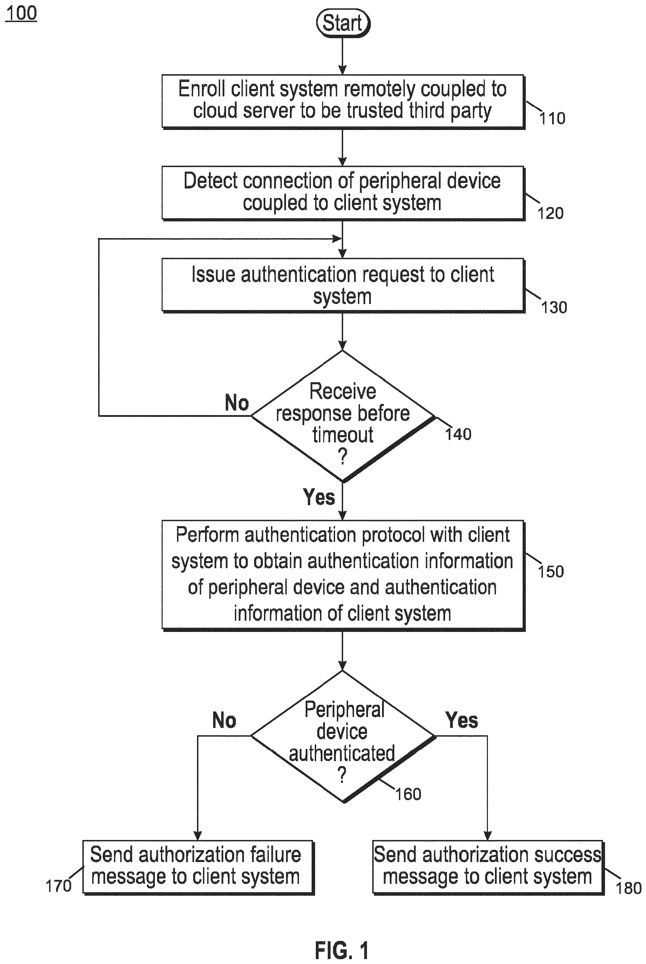

Referring now to FIG. 1, shown is a flow diagram of a method in accordance with an embodiment. As shown in FIG. 1, method 100 is a high level view of an authentication procedure in a cloud-based environment. More specifically, method 100 in FIG. 1 is with reference to a cloud-based server that includes authentication hardware circuitry, firmware and/or software to perform the cloud-based authentication of a peripheral device coupled to a client system(as a trusted third party) remotely located from the cloud-based server.

As illustrated, method 100 begins by enrolling the client system (block 110). More specifically, this client system, which may be an enterprise device, e.g., located at a given workplace, business or so forth and that may be IT managed remotely via the cloud, may be enrolled as a trusted third party. To this end, this enrollment process may be implemented using a protocol to establish the client system as a trusted third party, to enable authentications to proceed as described herein for peripheral devices that may become locally connected to it.

Note that the enrollment process may occur when the client system is configured into an enterprise and may be part of an authentication of that device in the cloud environment. And understand that different types of operations to perform enrollment may occur, e.g., based on a type of operating system (OS) that is used. In some cases, an OS-based technique may be used to enroll the client system as trusted third party. In other cases, a hypervisor or a virtual machine that executes under the hypervisor may perform the enrollment. Understand that the term "trusted third party" as used herein is not to mean that the client system is a certificate authority or other third party entity capable of providing keys or other cryptographic material or trust assertions, but instead is an authorized enrollee to obtain authentication information from peripheral devices for shipping to the cloud-based server.

Still with reference to FIG. 1, during normal operation of the client system, at block 120 the cloud server may detect connection of a peripheral device coupled to the client system. For example, a given USB or other peripheral device may be coupled to the client system, e.g., via a USB4 or other connection. This connection may be detected when the peripheral device is connected into the system, which may trigger a communication to be sent, e.g., via a browser-based communication to the cloud server.

Next at block 130, the cloud server issues an authentication request to the client system. This request may be in the form of a GET_DIGESTS request according to a USB Type-C authentication protocol (e.g., according to the USB-C Authentication Specification, revision 1.0, or any other version, modification or variation thereof), in an embodiment. Of course other authentication requests are possible.

Next it is determined at diamond 140 whether a response has been received before a timeout period occurs. If not, control passes back to block 130 where the authentication request again may be issued. Note that in some cases, this determination as to whether a response has been received is based on whether a response to the authentication request is received, or alternately whether a busy message has been received from the client system, to indicate that it is currently in the process of performing authentication protocol operations with the peripheral device.

Control next passes to block 150 where an authentication protocol may be performed with the client system to obtain authentication information of the peripheral device. In an embodiment, this information may be appended to or otherwise included with authentication information of the client system itself. In an embodiment, this authentication information may include digest information, certificate information and challenge response information. Of course additional or different information may be received in other embodiments.

Based at least in part on this information, the cloud server may determine at diamond 160 whether the peripheral device is authenticated. For example, if all of the digests, certificate and challenge response information indicate that the device is what it says is, e.g., by way of computed results matching expected results, the peripheral device may be authenticated. If so, control passes to block 180 where the cloud server may send an authorization success message to the client system. In response to this authorization success message, the client system may enable connection with the peripheral device, and can begin communicating with the peripheral device. Otherwise, the peripheral device is not authenticated, and control passes to block 170 where the cloud server may send an authorization failure message to the client system. In response to this authorization failure message, the client system may disconnect from the peripheral device. Understand while shown at this high level in the embodiment of FIG. 1, many variations and alternatives are possible.

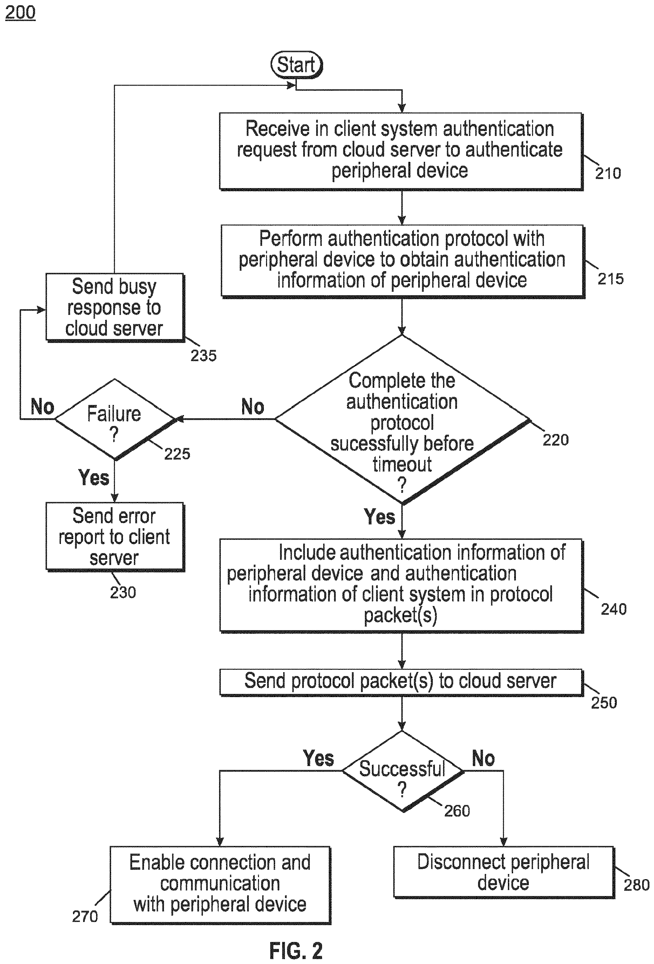

Referring now to FIG. 2, shown is a flow diagram of a method in accordance with another embodiment. As shown in FIG. 2, method 200 is a high level view of an authentication procedure in a cloud-based environment with reference to a client system that includes authentication hardware circuitry, firmware and/or software to act as a trusted third party in a cloud-based authentication of a peripheral device.

As illustrated, method 200 begins by receiving an authentication request in the client system from a cloud server (block 210). This authentication request may be a request to authenticate a peripheral device recently coupled to the client system that implements . In response to this authentication request which, in one embodiment may be in the form of a GET_DIGESTS request, the client system performs an authentication protocol with the peripheral device to obtain authentication information of the peripheral device (block 215). This authentication protocol may be a peer-to-peer authentication protocol.

Next at diamond 220 it may be determined whether the authentication protocol has completed successfully before a timeout period. In some embodiments, this timeout period may be set according to the protocol. If the authentication protocol is not completed in this time, control passes to diamond 225 to determine whether there was a failure. If so, at block 230 an error report is sent to the cloud server. If no failure occurs, the client may send a busy response to the cloud server at block 235, which may trigger the sending and receiving of another authentication request. Note that this busy signal sending may be optional in certain cases.

Still with reference to FIG. 2, when it is determined that the authentication protocol has successfully completed, control passes to block 240. At block 240 at least portions of the authentication information of the peripheral device may be included with at least some authentication information of the client system in one or more protocol packets. In an embodiment these protocol packets may be generated with a protocol format indicated by the cloud server, e.g., by way of application programming interface (API) information.

Note that in different embodiments, different manners of parsing and providing authentication information of both the peripheral device and the client system may occur. For example, the client system may only provide a portion of the received device authentication information to the cloud server. Similarly, only a portion of the available authentication information of the client system may be sent to the cloud server. And understand that whatever the amount, different manners of packaging the information for communication to the cloud server may occur. While an encapsulation technique may be used in one embodiment, other manners of packing the information may occur in other embodiments.

Still with reference to FIG. 2, control next passes to block 250 where these protocol packets are sent to the cloud server. At diamond 260, the client system may determine whether the authentication was successful. This determination may be based on a message from the cloud server that indicates either success or failure of the authentication. If successful, control passes to block 270 where the connection between the client system and the peripheral device is enabled. Accordingly, communications may proceed during normal operation. Otherwise if it is determined that the authentication was not successful, control passes to block 280 where the peripheral device may be disconnected, e.g., by disabling the USB or other connection between the devices. Understand while shown at this high level in the embodiment of FIG. 2, many variations and alternatives are possible.

Other authentication results may include determining, as a result of the authentication, whether a connected device is appropriate per a policy. For example, a vendor, concerned about product damage resulting from substandard charging devices, can set a policy requiring that only certified PD products be used for charging. As another example, a user, concerned about charging his phone at a public terminal, can set a policy requiring that the phone only charge from certified PD products. As a still further example, an organization, concerned about unidentifiable storage devices gaining access to corporate PC assets, can set a policy requiring that only USB storage devices that have been verified and signed by corporate IT are used. Of course other use cases for authentications as described herein may occur such as USB-C/USB4 docks that extend the ports of the client device.

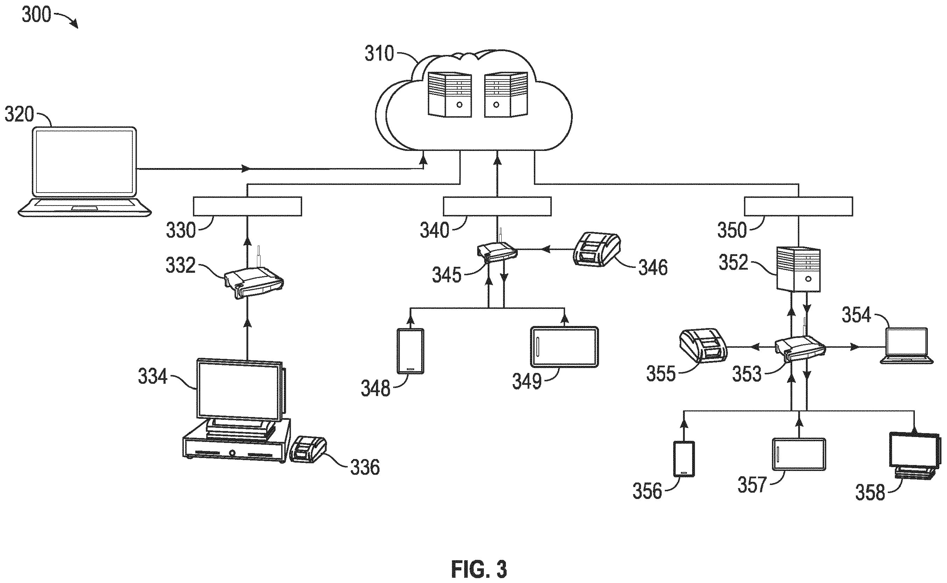

As described above, embodiments may be used in many different types of enterprise systems. Referring now to FIG. 3, shown is a block diagram of a system in accordance with one embodiment. As shown in FIG. 3, system 300 is a point-of sale (POS) system in a cloud environment. As shown in FIG. 3, various POS systems present within different retail environments remotely couple to one or more cloud servers 310. As illustrated, representative systems within POS system 300 include a first system 320 such as a given client computing system (e.g., laptop, desktop, server or other system) that may act as an administration reporting system. In turn, multiple different store types 330, 340, 350 may be present in POS system 300 and in turn include various internal systems and peripheral devices.

In PoS system 300, these connected peripherals (e.g., converged IO devices) may be used for high secure transactions and thus appropriate authentication is proper. As described herein cloud server 310 may act as the authentication initiator, although it resides in the cloud, to authenticate these non-peer devices.

As shown in FIG. 3, a first store 330 includes point-of-sale terminal 334 to which a printer 336 couples. In turn, system 334 may communicate, e.g., via an access point 332 (or gateway or wireless interface or so forth) to enable back end communication with cloud server 310. In embodiments herein, terminal 334 may act as a client system and more specifically as a trusted third party to be an intermediary device in an authentication protocol initiated by cloud server 310 to authenticate, e.g., printer 336. Understand of course that additional peripheral devices may be coupled to terminal 334 and other systems within store 330, and may be authenticated in a similar manner, such that one-to-many authentication of devices within a given enterprise environment may occur as described herein.

As shown in FIG. 3, a second store 340 includes an access point 345 to enable back end communication with cloud server 310. As shown, access point 345 may have various devices coupled to it, including a printer 346, a smartphone 348, and a tablet computer 349. In embodiments herein, access point 345 may act as a client system and more specifically as a trusted third party to be an intermediary device in an authentication protocol initiated by cloud server 310 of these peripheral devices. Understand of course that additional peripheral devices may be coupled to access point 345 and other systems within store 340, and may be authenticated in a similar manner.

As shown in FIG. 3, in a third store 350 a local server 352 is coupled to an access point 353. As further illustrated, various devices coupled to access point 353, including a printer 355, a laptop 354, a smartphone 356, a tablet computer 357, and a display 358. In embodiments herein, server 352 may act as a client system and more specifically as a trusted third party to be an intermediary device in an authentication protocol initiated by cloud server 310 to authenticate these or other peripheral devices. Understand of course that additional peripheral devices may be coupled to server 352 and other systems within store 350, and may be authenticated in a similar manner.

Alternately, another ecosystem that is evolving is "Grab and Go with Chrome Enterprise," a self-service shared Chromebook^{™} program. As one example in an enterprise system a shelf stacked with Chromebooks^{™} can be used by employees to pick up a device and get to work in minutes. When the user is done, the device is put back for the next user, no reconfiguration necessary. Embodiments may be used to connect and authenticate peripherals in such an environment.

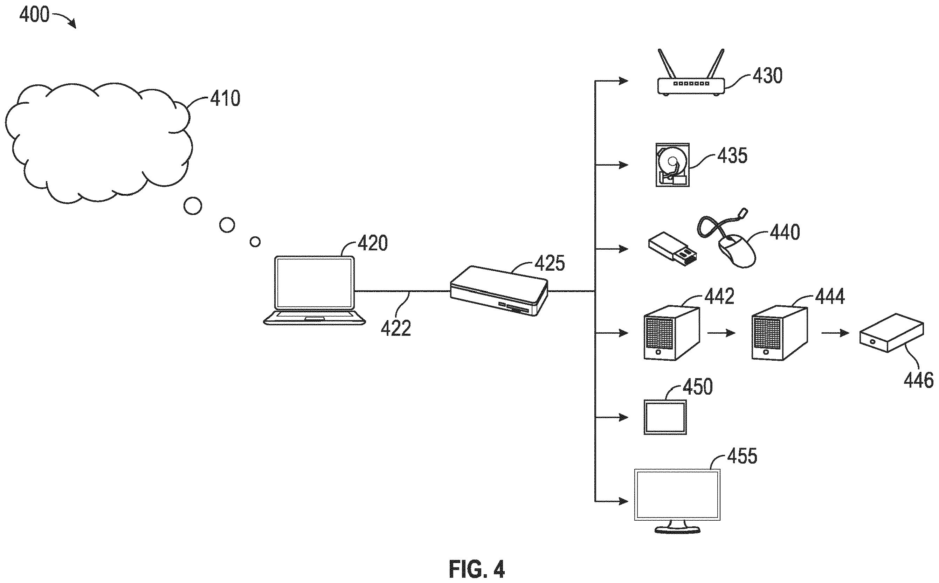

Referring now to FIG. 4, shown is a block diagram of an enterprise environment in accordance with another embodiment. As shown in FIG. 4, enterprise environment 400 includes a cloud server 410 to which a client computing system 420 couples remotely, e.g., via the Internet. As one example, client system 420 may be a shared Chromebook^{™} laptop computer. Of course many other types of client systems are possible. As seen, via a cable 422, client system 420 couples to a docking system 425, which in an embodiment may be a Thunderbolt 3-compatible docking system to which a variety of different devices may couple. In one embodiment, cable 422 may be implemented as a USB Type-C cable. Of course other examples are possible.

As further shown in FIG. 4, a plurality of peripheral devices may couple to docking system 425. For example, a network adapter 430, a host port 435, and a USB hub 440 to which various devices may couple also may be connected. Still further as shown, Thunderbolt devices 442, 444 may couple to docking system 425, along with a storage device 446, e.g., a USB storage device. In addition, a card reader 450 and a display 455, which may communicate according to a DisplayPort protocol, also may couple to docking system 425.

With embodiments, all of these peripheral devices may be authenticated in environment 400. More particularly, cloud server 410 may be an initiator of such authentications via communication of authentication requests to client system 420 that in turn may perform a peer-to-peer authentication protocol to obtain authentication information of the peripheral device. In turn, client system 420 may include at least some of this information and at least some of its own authentication information and communicate it, e.g., via protocol packets to cloud server 410 to enable cloud server 410 to determine whether a given peripheral device is authenticated to thus enable normal operation. While shown at this high level in the embodiment of FIG. 4, many variations and alternatives are possible.

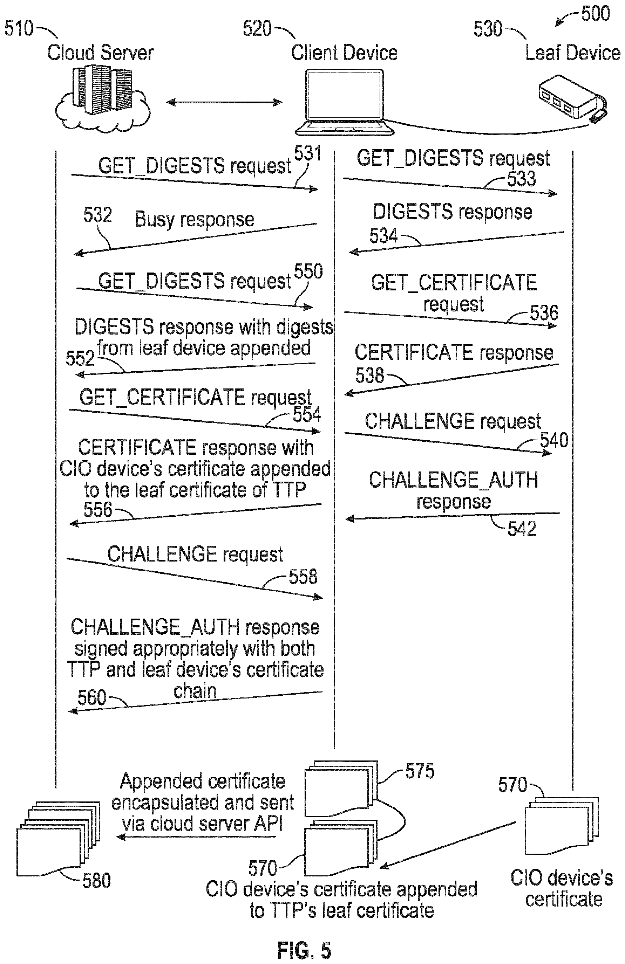

Referring now to FIG. 5, shown is an illustration of an authentication sequence in accordance with an embodiment. As shown in FIG. 5, in a cloud environment 500, a cloud server 510 acts an authentication initiator and initiates a communication with a client device 520, e.g., a laptop, desktop or so forth in response to connection of a new device to client device 520, e.g., a leaf device 530. Understand that while leaf device 530 may physically couple to client device 520, e.g., via a USB cable, client device 520 is remotely located from cloud server 510, to which it may connect, e.g., via the Internet. As shown in the illustration of FIG. 5, leaf device 530 may be a USB hub. Of course many other types of leaf devices are possible.

As shown in FIG. 5, cloud server 510 may initiate an authentication protocol that is based on the USB-C Authentication Specification. To begin the process, cloud server may send a GET_DIGESTS request 531 to client device 520. In response to receipt of this request, which begins the authentication sequence, device 520 may first issue a busy response 532 back to cloud server 510 to indicate that authentication results are not ready yet. This busy response will trigger a later request for authentication (e.g., via another GET_DIGESTS request).

As further shown in FIG. 5, client device 520 may issue a GET_DIGESTS request 533 to leaf device 530. In turn, leaf device 530 sends a DIGESTS response 534 to send certificate chain digests. Next in one embodiment, client device 520 (or cloud server 510) may first check if a certificate chain is already cached by it. If not, client device 520 sends a GET_CERTIFICATE request 536 to read a certificate chain of leaf device 530. In response to this request, leaf device 530 sends a CERTIFICATE response 538 to send the requested segment of the certificate chain.

Still with reference to FIG. 5, next client device 520 may issue a CHALLENGE request 540 to challenge leaf device 530 in order to verify its authenticity. Note that client device 520 may be, in an embodiment a USB PD peer device and generates the challenge over a USB PD protocol. In different embodiments, the challenge can be generated by an operating system, embedded controller or PD controller, as examples. Of course in other cases, the client side implementation can be located in any part of client device 520. Client device 530 may, in response, prepare and send a CHALLENGE_AUTH response 542 to enable verification of its authenticity.

While client device 520 receives the above-described authentication information from leaf device 530, it does not verify the contents itself. Instead, as further shown in FIG. 5, additional aspects of the authentication sequence cause client device 520 to send at least portions of this authentication information (which may be appended to authentication information of client device 520 itself) to cloud server 510.

Thus after obtaining all the authentication information from leaf device 530, it is sent to cloud server 510. More specifically, client device 520 has the required certificate chain from leaf device 530. Thus in response to GET_DIGESTS request 550, it sends a DIGESTS_response 552 with digests from leaf device 530 appended to its digests. Similarly, in response to GET_CERTIFICATES request 554, it appends the certificate chain of leaf device 530 to its leaf certificate, related ACD object and TLVs applicable to leaf device 530. Client system 520 may append the leaf device's certificate encoded in X509v3 ASN.1 format to its leaf certificate and ACD object. The ACD object may contain a VENDOR EXTENSION TLV to denote that the authentication response contains appended information of the leaf device, followed by TLVs applicable for the leaf device.

In an embodiment, the certificates may be encapsulated in protocol packets in x509v3 ASN.1 format and sent via the cloud server APIs defined by a cloud service provider. As further shown in FIG. 5, client device 520 sends in response to a CHALLENGE request 558 a CHALLENGE_AUTH response 560 appropriately signed by its own certificate as well as the certificate of leaf device 530. The 'CHALLENGE AUTH' response from client system 520 may contain an appropriate hash (e.g., secure hash algorithm (SHA)256) of the certificate chain and an elliptic curve digital signature algorithm (ECDSA) digital signature received from leaf device 530.

Cloud server 510 may use the appended certificate information to send 'CHALLENGE' request 558, and validate `CHALLENGE AUTH' response 560 of leaf device 530 as sent through client device 520.

Cloud server 510, in an embodiment, may implement a USB PD authentication protocol state machine and libraries for computation of secure information. Once the application/daemon running on cloud server 510 receives notification of connection of leaf device 530, it starts the state machine. Handshake between cloud server 510 and client device 520 may be based on a pre-defined format. In this way, cloud server 510 extracts the appended information of leaf device 530 to validate/authenticate it. While not shown in FIG. 5, understand that cloud server 510 may send an authentication result, e.g., as defined in the USB PD authentication specification. Thus leaf device 530 does not know it is being authenticated by cloud server 510.

Note that if leaf device 530 is a USB PD capable product, it can use USB PD messages to send the authentication protocol sequence. In this case, authentication request messages are sent as security_request USB PD messages and authentication response messages are send as security_response USB PD messages. In other cases, leaf device 530 may send authentication messages through USB control transfer messages for non-USB PD capable device to use the same authentication methodology.

FIG. 5 also shows a portion of the authentication information provided to cloud server 510. As illustrated, at least one certificate 570 of leaf device 530 is sent to client device 520. In an embodiment, client device 520 appends this certificate to its leaf certificate 575, and sends this authentication information via a cloud server API as an encapsulated packet 580. Understand that other examples are possible and further authentication information may be sent in given embodiments.

With respect to the above discussion, a certificate is a digital form of identification that provides information about an entity and certifies ownership of a particular public key. Note that a certificate chain is a series of two or more certificates where each certificate is signed by the preceding certificate in the chain. In turn, a certificate chain topology may include a root certificate that is self signed and USB-IF issued and acts as a first certificate in a chain. In turn, an intermediary certificate may be root signed and USB-IF issued. In turn, a leaf certificate may be issued by a product owner and may include allowed extensions.

In an embodiment, certificates may use the X509v3 ASN.1 structure. Certificates may use binary DER encoding for ASN.1. Certificates may use the cryptographic methods and the certificate format assumes that the reader is familiar with X509v3 certificate terminology. In some cases, leaf certificates are not allowed to exceed a MaxLeafCertSize in length. Intermediate Certificates similarly may not be allowed to exceed a MaxIntermediateCertSize in length.

In embodiments, the certificates are provided various Attributes and Extensions with object identifiers (OID) wherever applicable. The certificate also may contain a custom certificate extension, namely USB-IF additional certificate data (ACD) (OID 2.23.145.1.2)". The USB-IF ACD is a custom certificate extension for use with compliant products. Note that leaf certificates may contain this extension and non-leaf certificates may use this extension. The ACD formatting may include a sequence of zero or more Type, Length, Value (TLV) fields that start at the first byte of a binary object. Table 1 below depicts the various types of TLV objects available in the leaf certificate as part of extension.

**Table 1**

| | **Table A-2: TLV Types** |
|---|---|
| **Value** | **Name** |
| 00h | VERSION |
| 01h | XID |
| 02h | POWER_SOURCE_CAPABILITIES |
| 03h | POWER_SOURCE_CERTIFICATIONS |
| 04h | CABLE_CAPABILITIES |
| 05h | SECURITY_DESCRIPTION |
| 06h - FCh | Reserved |
| FDh | PLAYPEN |
| FEh | VENDOR_EXTENSION |
| FFh | EXTENSION |

With the arrangement above in FIG. 5, client device 520 may thus retrieve ACD details of leaf device 530 and pack the USB-IF ACD object in the packet format of the cloud server API framework and send it to cloud server 510 that acts as CIO authentication initiator. In this way, client device 520 acts as a trusted third party to provide a secure session of trust and establish an authenticated environment.

While FIG. 5 shows a specific implementation, more generally with an embodiment, an intermediary device can authenticate a leaf device (authentication responder) as a first step and append product details in TLV format related to the authenticated device in the USB-IF ACD object to the leaf certificate. Then an original authentication initiator (e.g., a cloud server) may receive from the intermediary device key information as part of the Leaf certificates. The authentication initiator may then use the appended information in the leaf certificate to authenticate the non-peer device. To transfer certificates to the cloud environment, they may be encapsulated in protocol packets in the same X509v3 ASN.1 structure to the cloud server in the API defined by the respective cloud service provider.

With embodiments, a secure session for a high compute system occurs to authenticate non-peer devices. Thus with embodiments, non-peer devices may be authenticated by using an intermediary device as a trusted third party.

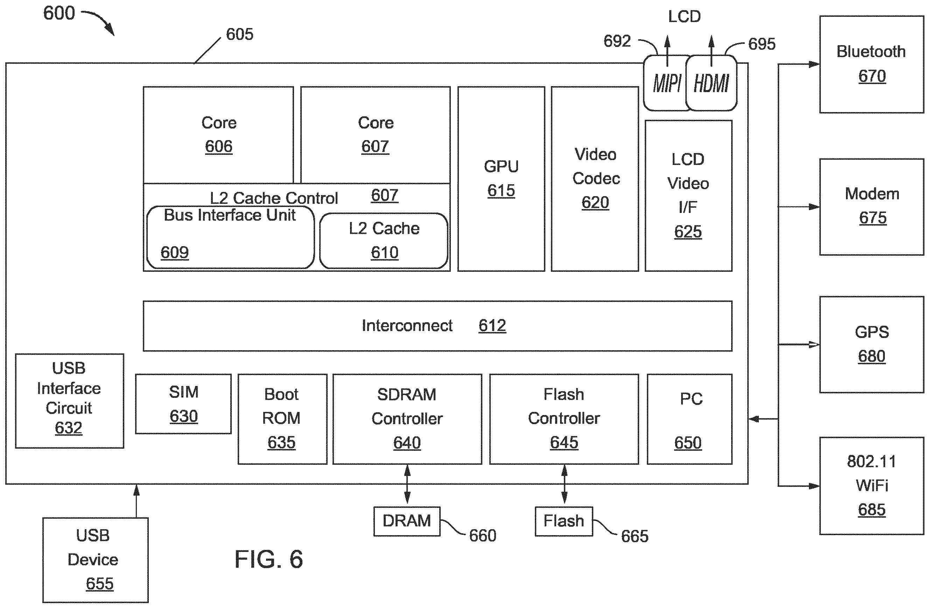

Turning next to FIG. 6, an embodiment of a system in accordance with an embodiment is depicted. As one example, a system 600 is a client system to perform USB authentications as described herein. As a specific illustrative example, system 600 includes a SoC 605 that may be configured for insertion in any type of computing device, ranging from portable device to any other client system. Here, SoC 705 includes 2 cores 606 and 607. Cores 606 and 607 may conform to an Instruction Set Architecture, such as an Intel^{®} Architecture Core^{™}-based processor, an Advanced Micro Devices, Inc. (AMD) processor, a MIPS-based processor, an ARM-based processor design, or a customer thereof, as well as their licensees or adopters. Cores 606 and 607 are coupled to cache controller 608 that is associated with bus interface unit 609 and L2 cache 610 to communicate with other parts of system 600 via an interconnect 612.

Interconnect 612 provides communication channels to the other components, such as a Subscriber Identity Module (SIM) 630 to interface with a SIM card, a boot ROM 635 to hold boot code for execution by cores 606 and 607 to initialize and boot SoC 605, a SDRAM controller 640 to interface with external memory (e.g., DRAM 660), a flash controller 645 to interface with non-volatile memory (e.g., flash 665), a peripheral controller 650 (e.g., an eSPI interface) to interface with peripherals, video codec 620 and video interface 625 to display and receive input (e.g., touch enabled input), GPU 615 to perform graphics related computations, etc. In addition, the system illustrates peripherals for communication, such as a Bluetooth module 670, 3G modem 675, GPS 680, and WiFi 685. Further illustrated in FIG. 6, system 600 may additionally include interfaces including a MIPI interface 692, e.g., to a display and/or an HDMI interface 695 also which may couple to the same or a different display.

As further shown, SoC 605 may include a USB interface circuit 632, which may be configured to perform USB authentication protocols with connected USB devices (such as USB device 655) in response to an authentication request received from a cloud-based server, as described herein. To this end, USB interface circuit 632 may include hardware, software and/or firmware to perform a peer-to-peer authentication process to obtain authentication information from USB device 655 and send at least portions of it to the cloud-based server to enable remote authentication.

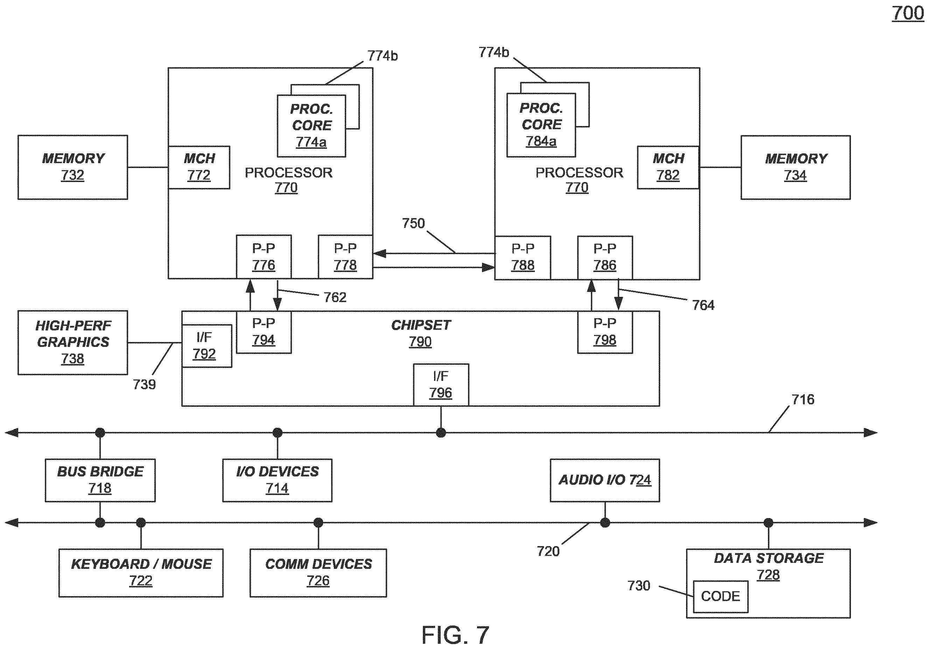

Referring now to FIG. 7, shown is a block diagram of a system in accordance with another embodiment of the present invention. As shown in FIG. 7, multiprocessor system 700, which may be a cloud server to act as an authentication initiator as described herein, includes a first processor 770 and a second processor 780 coupled via a point-to-point interconnect 750. As shown in FIG. 7, each of processors 770 and 780 may be many core processors including representative first and second processor cores (i.e., processor cores 774a and 774b and processor cores 784a and 784b).

Still referring to FIG. 7, first processor 770 further includes a memory controller hub (MCH) 772 and point-to-point (P-P) interfaces 776 and 778. Similarly, second processor 780 includes a MCH 782 and P-P interfaces 786 and 788. As shown in FIG. 7, MCH's 772 and 782 couple the processors to respective memories, namely a memory 732 and a memory 734, which may be portions of system memory (e.g., DRAM) locally attached to the respective processors. First processor 770 and second processor 780 may be coupled to a chipset 790 via P-P interconnects 776 and 786, respectively. As shown in FIG. 7, chipset 790 includes P-P interfaces 794 and 798.

Furthermore, chipset 790 includes an interface 792 to couple chipset 790 with a high performance graphics engine 738, by a P-P interconnect 739. As shown in FIG. 7, various input/output (I/O) devices 714 may be coupled to first bus 716, along with a bus bridge 718 which couples first bus 716 to a second bus 720. Various devices may be coupled to second bus 720 including, for example, a keyboard/mouse 722, communication devices 726 and a data storage unit 728 such as a disk drive or other mass storage device which may include code 730, in one embodiment. Such code may include, in an embodiment, authentication code to perform remote authentication of peer devices coupled to remote client devices, as described herein. As further shown, an audio I/O 724 may be coupled to second bus 720.

The following examples pertain to further embodiments.

In one example, a method comprises: receiving, in a client system, an authentication request from a cloud server remotely coupled to the client system, the authentication request for authentication of a device coupled to the client system; in response to the authentication request, performing an authentication protocol with the device via the client system, including obtaining device authentication information of the device; placing at least a portion of the device authentication information and authentication information of the client system in a protocol packet, and sending the protocol packet to the cloud server; and in response to a challenge request from the cloud server, sending to the cloud server a challenge response signed with a first certificate of the client system and a second certificate of the device, to cause the cloud server to authenticate the device.

In an example, the method further comprises establishing a secure session between the client system and the device in response to the authentication of the device by the cloud server.

In an example, the method further comprises placing the authentication information and the at least portion of the device authentication information in the protocol packet according to an application programming interface defined by the cloud server.

In an example, obtaining the device authentication information of the device comprises obtaining at least one digest and a certificate chain, the certificate chain comprising additional certificate data.

In an example, the method further comprises obtaining the at least one digest and the certificate chain from the device using Universal Serial Bus power delivery security messages.

In an example, the method further comprises receiving the authentication request in response to coupling the device to the client system via a Universal Serial Bus connector.

In an example, the method further comprises performing the authentication protocol according to a Universal Serial Bus-Type C peer-to-peer authentication protocol, in response to the authentication request from the cloud server.

In an example, the method further comprises communicating with the cloud server to enroll the client system as a trusted third-party, to enable the client system to perform the authentication protocol with the device.

In an example, the method further comprises appending the at least portion of the device authentication information to the authentication information and encapsulating the appended portion of the device authentication information and the authentication information in the protocol packet.

In another example, a computer readable medium including instructions is to perform the method of any of the above examples.

In a further example, a computer readable medium including data is to be used by at least one machine to fabricate at least one integrated circuit to perform the method of any one of the above examples.

In a still further example, an apparatus comprises means for performing the method of any one of the above examples.

In another example, a system includes a cloud server. The cloud server may include: at least one processor to execute instructions; and a non-transitory storage medium coupled to the at least one processor comprising instructions that when executed cause the at least one processor to: determine that a device has been connected to a system remotely coupled to the cloud server; in response to the determination of device connection, send, as authentication initiator, an authentication request to the client system to obtain device authentication of the device; in response to the authentication request, receive via the system one or more protocol packets comprising the device authentication information; and remotely authenticate the device in the cloud server using the device authentication information.

In an example, the non-transitory storage medium further comprises instructions that cause the at least one processor to: receive digest information of the device appended to digest information of the system; and thereafter request certificate information from the system.

In an example, the non-transitory storage medium further comprises instructions that cause the at least one processor to: in response to the request for the certificate information, receive the certificate information comprising device certificate information of the device and system certificate information of the system; and thereafter issue a challenge request to the system.

In an example, the non-transitory storage medium further comprises instructions that cause the at least one processor to in response to the challenge request, receive a challenge response from the system, the challenge response signed using the device certificate information and the system certificate information.

In an example, the non-transitory storage medium further comprises instructions that cause the at least one processor to further send application programming information to the system to enable the system to format the one or more protocol packets comprising the device authentication information.

In an example, the non-transitory storage medium further comprises instructions that cause the at least one processor to enroll the system as a trusted third party to enable the system to perform a Universal Serial Bus authentication protocol to obtain the device authentication information of the device.

In yet another example, an apparatus includes: at least one processor; and a USB interface coupled to the at least one processor to connect the apparatus to one or more USB devices. In response to connection of a first USB device to the apparatus, the apparatus is to inform a cloud server of the connection, the cloud server remote from the apparatus, where in response to an authentication request from the cloud server, the apparatus is to obtain device authentication information from the first USB device via a USB peer-to-peer authentication protocol and send at least a portion of the device authentication information to the cloud server, to enable the cloud server to remotely authenticate the first USB device.

In an example, the apparatus is to generate a protocol packet comprising the at least portion of the device authentication information and authentication information of the apparatus and send the protocol packet to the cloud server.

In an example, the apparatus, in response to a challenge request from the cloud server, is to send to the cloud server a challenge response signed with a first certificate of the apparatus and a second certificate of the first USB device, to enable the cloud server to authenticate the first USB device.

In an example, the apparatus comprises a battery, where in response to the authentication of the first USB device, the apparatus is to enable the first USB device to charge the battery, the first USB comprising a USB power delivery device.

In an example, the apparatus is to obtain the at least one digest and the certificate chain from the first USB device using USB power delivery security messages.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SoC or other processor, is to configure the SoC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMS), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present invention has been described with respect to a limited number of embodiments, those skilled in the art will appreciate numerous modifications and variations therefrom.

## Claims

1. A method comprising:
receiving (210), in a client system, an authentication request from a cloud server remotely coupled to the client system, the authentication request for authentication of a device coupled to the client system;
in response to the authentication request, performing (215) an authentication protocol with the device via the client system, including obtaining device authentication information of the device;
placing (240) at least a portion of the device authentication information and authentication information of the client system in a protocol packet, and sending (250) the protocol packet to the cloud server; **characterized by**
in response to a challenge request from the cloud server, sending to the cloud server a challenge response signed with a first certificate of the client system and a second certificate of the device, to cause the cloud server to authenticate the device.

2. The method of claim 1, wherein the method further comprises establishing a secure session between the client system and the device in response to the authentication of the device by the cloud server.

3. The method of claim 1, wherein the method further comprises placing the authentication information and the at least portion of the device authentication information in the protocol packet according to an application programming interface defined by the cloud server.

4. The method of claim 1, wherein obtaining the device authentication information of the device comprises obtaining at least one digest and a certificate chain, the certificate chain comprising additional certificate data.

5. The method of claim 4, wherein the method further comprises obtaining the at least one digest and the certificate chain from the device using Universal Serial Bus power delivery security messages.

6. The method of claim 1, wherein the method further comprises receiving the authentication request in response to coupling the device to the client system via a Universal Serial Bus connector.

7. The method of claim 6, wherein the method further comprises performing the authentication protocol according to a Universal Serial Bus-Type C peer-to-peer authentication protocol, in response to the authentication request from the cloud server.

8. The method of claim 1, wherein the method further comprises communicating with the cloud server to enroll the client system as a trusted third-party, to enable the client system to perform the authentication protocol with the device.

9. The method of claim 1, wherein the method further comprises appending the at least portion of the device authentication information to the authentication information and encapsulating the appended portion of the device authentication information and the authentication information in the protocol packet.

10. A computer-readable storage medium including computer-readable instructions, when executed, to implement a method as claimed in any one of claims 1 to 9.

11. An apparatus comprising means to perform a method as claimed in any one of claims 1 to 9.

## Patentansprüche

1. Verfahren, umfassend:
Empfangen (210), in einem Client-System, einer Authentifizierungsanforderung von einem Cloud-Server, der entfernt mit dem Client-System gekoppelt ist, wobei die Authentifizierungsanforderung zur Authentifizierung eines mit dem Client-System gekoppelten Geräts dient;
als Reaktion auf die Authentifizierungsanforderung, Ausführen (215) eines Authentifizierungsprotokolls mit dem Gerät über das Client-System, aufweisend Erhalten von Geräteauthentifizierungsinformationen des Geräts;
Platzieren (240) mindestens eines Teils der Geräteauthentifizierungsinformationen und der Authentifizierungsinformationen des Client-Systems in einem Protokollpaket, und Senden (250) des Protokollpakets an den Cloud-Server; **gekennzeichnet durch**
als Reaktion auf eine Challenge-Anforderung von dem Cloud-Server, Senden einer Challenge-Antwort an den Cloud-Server, die mit einem ersten Zertifikat des Client-Systems und einem zweiten Zertifikat des Geräts signiert ist, um den Cloud-Server zu veranlassen, das Gerät zu authentifizieren.

2. Verfahren nach Anspruch 1, wobei das Verfahren ferner Herstellen einer sicheren Sitzung zwischen dem Client-System und dem Gerät als Reaktion auf die Authentifizierung des Geräts durch den Cloud-Server umfasst.

3. Verfahren nach Anspruch 1, wobei das Verfahren ferner Platzieren der Authentifizierungsinformationen und des mindestens einen Teils der Geräteauthentifizierungsinformationen in dem Protokollpaket gemäß einer Anwendungsprogrammierschnittstelle, die durch den Cloud-Server definiert ist, umfasst.

4. Verfahren nach Anspruch 1, wobei das Erhalten der Geräteauthentifizierungsinformationen des Geräts Erhalten mindestens eines Digest und einer Zertifikatskette umfasst, wobei die Zertifikatskette zusätzliche Zertifikatsdaten umfasst.

5. Verfahren nach Anspruch 4, wobei das Verfahren ferner Erhalten des mindestens einen Digest und der Zertifikatskette von dem Gerät unter Verwendung von Universal-Serial-Bus-Leistungsabgabe-Sicherheitsmeldungen umfasst.

6. Verfahren nach Anspruch 1, wobei das Verfahren ferner Empfangen der Authentifizierungsanforderung als Reaktion auf das Koppeln des Geräts mit dem Client-System über einen Universal-Serial-Bus-Anschluss umfasst.

7. Verfahren nach Anspruch 6, wobei das Verfahren ferner Durchführen des Authentifizierungsprotokolls gemäß einem Peer-to-Peer-Authentifizierungsprotokoll des Universal Serial Bus vom Typ C als Reaktion auf die Authentifizierungsanforderung von dem Cloud-Server umfasst.

8. Verfahren nach Anspruch 1, wobei das Verfahren ferner Kommunizieren mit dem Cloud-Server, um das Client-System als einen vertrauenswürdigen Dritten zu registrieren, um es dem Client-System zu ermöglichen, das Authentifizierungsprotokoll mit dem Gerät durchzuführen, umfasst.

9. Verfahren nach Anspruch 1, wobei das Verfahren ferner Anhängen des mindestens einen Teils der Geräteauthentifizierungsinformationen an die Authentifizierungsinformationen und Kapseln des angehängten Teils der Geräteauthentifizierungsinformationen und der Authentifizierungsinformationen in dem Protokollpaket umfasst.

10. Computerlesbares Speichermedium, das computerlesbare Anweisungen zum Implementieren, bei Ausführung, eines Verfahrens nach einem der Ansprüche 1 bis 9 aufweist.

11. Vorrichtung, umfassend Mittel zum Durchführen eines Verfahrens nach einem der Ansprüche 1 bis 9.

## Revendications

1. Procédé comprenant :
la réception (210), dans un système client, d'une demande d'authentification à partir d'un serveur infonuagique couplé à distance au système client, la demande d'authentification portant sur un dispositif couplé au système client ;
en réponse à la demande d'authentification, la réalisation (215) d'un protocole d'authentification avec le dispositif par l'intermédiaire du système client, comportant l'obtention d'informations d'authentification de dispositif du dispositif ;
le placement (240) d'au moins une partie des informations d'authentification de dispositif et d'informations d'authentification du système client dans un paquet de protocole, et l'envoi (250) du paquet de protocole au serveur infonuagique ; **caractérisé par**
en réponse à une demande de défi à partir du serveur infonuagique, l'envoi au serveur infonuagique d'une réponse de défi signée avec un premier certificat du système client et un deuxième certificat du dispositif, pour amener le serveur infonuagique à authentifier le dispositif.

2. Procédé selon la revendication 1, le procédé comprenant l'établissement d'une session sécurisée entre le système client et le dispositif en réponse à l'authentification du dispositif par le serveur infonuagique.

3. Procédé selon la revendication 1, le procédé comprenant en outre le placement des informations d'authentification et de l'au moins une partie des informations d'authentification de dispositif dans le paquet de protocole conformément à une interface de programmation d'application définie par le serveur infonuagique.

4. Procédé selon la revendication 1, dans lequel l'obtention des informations d'authentification de dispositif du dispositif comprend l'obtention d'au moins un condensé et d'une chaîne de certificat, la chaîne de certificat comprenant des données de certificat supplémentaires.

5. Procédé selon la revendication 4, le procédé comprenant en outre l'obtention de l'au moins un condensé et de la chaîne de certificat à partir du dispositif à l'aide de messages de sécurité de distribution d'alimentation de bus série universel.

6. Procédé selon la revendication 1, le procédé comprenant en outre la réception de la demande d'authentification en réponse au couplage du dispositif au système client par l'intermédiaire d'un connecteur de bus série universel.

7. Procédé selon la revendication 6, le procédé comprenant en outre l'exécution du protocole d'authentification conformément à un protocole d'authentification poste à poste de bus série universel de type C, en réponse à la demande d'authentification provenant du serveur infonuagique.

8. Procédé selon la revendication 1, le procédé comprenant en outre en outre la communication avec le serveur infonuagique pour inscrire le système client en tant que tiers de confiance, afin de permettre au système client de réaliser le protocole d'authentification avec le dispositif.

9. Procédé selon la revendication 1, le procédé comprenant en outre l'ajout de l'au moins une partie des informations d'authentification de dispositif aux informations d'authentification et l'encapsulation de la partie annexée des informations d'authentification de dispositif et des informations d'authentification dans le paquet de protocole.

10. Support de stockage lisible par ordinateur comprenant des instructions lisibles par ordinateur qui, à leur exécution, mettent en œuvre un procédé selon l'une quelconque des revendications 1 à 9.

11. Appareil comprenant des moyens pour réaliser un procédé selon l'une quelconque des revendications 1 à 9.
